# EUROPEAN PATENT APPLICATION

(11) **EP 4 729 243 A1**
(43) Date of publication of application: **22.04.2026**
(21) Application number: 24206993.8
(22) Date of filing: 16.10.2024
(51) Int. Cl.: B25F 5/02, A01D 34/416

(54) **FOLDING MECHANISM**

(71) Applicant: Techtronic Cordless GP, Anderson, SC 29621 (US)
(72) Inventor: ZHONG, Jun Jie, Dongguan (CN); ZHANG, Peng, Dongguan (CN)
(74) Representative: Zimmermann & Partner Patentanwälte mbB

(57) **Abstract**

A folding mechanism for a tool comprising a first pole section and a second pole section comprises a first coupling component configured to receive one end of the first pole section, comprising a first hinging hole and a first locking hole; a second coupling component configured to receive one end of the second pole section, comprising a second hinging hole and a second locking hole, where the second locking hole is at least partially formed with an internal screw thread; a hinging bolt arranged to pass through the first hinging hole and the second hinging hole; and a locking bolt configured to pass through the first locking hole and the second locking hole, the locking bolt comprising an external screw thread at a first end and a handle for turning the locking bolt at a second end, where the external screw thread is configured to engage with the internal screw thread of the second locking hole; wherein the first locking hole comprises a retaining element to prevent removal of the locking bolt from the first locking hole.

## Description

### FIELD OF THE DISCLOSURE

The present disclosure relates to folding mechanism for a tool and a foldable tool comprising the folding mechanism.

### BACKGROUND OF THE DISCLOSURE

Many tools are implemented with a pole to extend the reach of the user. A handle for the user may be formed at one end of the pole, while a working component of the tool is arranged at the other end of the pole. This can allow the user to work at a greater range, e.g. higher or further away. However, the pole can be cumbersome and the length of the pole can significantly increase the space required to store or travel the tool.

For this reason, foldable tools may include a first pole section and a second pole with a folding mechanism connecting the two pole sections. The folding mechanism may allow the tool to be locked in a working arrangement, with the pole sections aligned, or unlocked to allow folding of the tool.

It is an object of the present disclosure to address or at least partially ameliorate some of the problems of the current approaches.

### SUMMARY OF THE DISCLOSURE

Features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims.

In accordance with a first aspect of the present disclosure, there is provided a folding mechanism for a tool comprising a first pole section and a second pole section, the folding mechanism comprising: a first coupling component configured to receive one end of the first pole section, comprising a first hinging hole and a first locking hole; a second coupling component configured to receive one end of the second pole section, comprising a second hinging hole and a second locking hole, where the second locking hole is at least partially formed with an internal screw thread; a hinging bolt configured to pass through the first hinging hole and the second hinging hole; and a locking bolt configured to pass through the first locking hole and the second locking hole, the locking bolt comprising an external screw thread at a first end and a handle for turning the locking bolt at a second end, where the external screw thread is configured to engage with the internal screw thread of the second locking hole; wherein the first locking hole comprises a retaining element to prevent removal of the locking bolt from the first locking hole.

The retaining element may include a narrow section of the first locking hole which is narrower than a diameter of the external screw thread on the locking bolt.

The narrow section of the first locking hole may be formed as an internal screw thread corresponding to the external screw thread on the locking bolt.

The internal screw thread of the second locking hole may be formed by a nut arranged within a corresponding recess formed in the second coupling component.

The first coupling component may be configured to detachably connect to the first pole section and the second coupling component may be configured to detachably connect to the second pole section.

Each coupling component may include a receiving recess configured to receive the respective pole section, and a locking member formed on a radial outer surface of the receiving recess and extending beyond a linear extent of the receiving recess.

Each locking hole may be formed in a portion of the respective locking member which overlaps with the other locking member when the coupling components are in abutment.

Each coupling component may include a hinging member formed on the radial outer surface of the receiving recess opposite to the locking member and extending beyond the linear extent of the receiving recess.

Each hinging hole may be formed in a portion of the respective hinging member which overlaps with the other hinging member when the coupling components are in abutment.

One of the first and the second coupling components may include a second hinging member and second hinging hole through the second hinging member.

The hinging bolt may be arranged to pass through both hinging holes of the coupling component as well as the hinging hole of the other coupling component.

In accordance with a second aspect of the present disclosure, there is provided a foldable tool comprising a pole divided into a first pole section and a second pole section; a handle arranged at a first end of the first pole section; a working component arranged at a first end of the second pole section; and the folding mechanism of any preceding claim, wherein the second end of the first pole section is received by the first coupling component, and the second end of the second pole section is received by the second coupling component.

The foldable tool may include a motor configured to operate the working component, and a user input arranged on the handle and configured to activate the motor.

The motor may be arranged at the first end of the second pole section and connected to the user input with a wire.

The wire may be configured to pass through the first pole section, first coupling component, second coupling component and the second pole section.

The working component may include a line trimmer.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended Figures. Understanding that these Figures depict only exemplary embodiments of the disclosure and are not therefore to be considered to be limiting of its scope, the principles herein are described and explained with additional specificity and detail through the use of the accompanying Figures.

Preferred embodiments of the present disclosure will be explained in further detail below by way of examples and with reference to the accompanying Figures, in which:
Figure 1 is a schematic diagram showing a folding mechanism according to an embodiment.
Figure 2 is a schematic diagram showing a folding mechanism according to an embodiment.
Figure 3 is a schematic diagram showing a locking bolt according to an embodiment.
Figure 4 is a schematic diagram showing a cross-section of a folding mechanism according to an embodiment.
Figure 5 is a schematic diagram showing a foldable tool with a folding mechanism according to an embodiment.

### DETAILED DESCRIPTION OF THE PREFERRED EMBODIMENTS

Various embodiments of the disclosure are discussed in detail below. While specific implementations are discussed, it should be understood that this is done for illustration purposes only. A person skilled in the relevant art will recognize that other components and configurations may be used without departing from the scope of the disclosure.

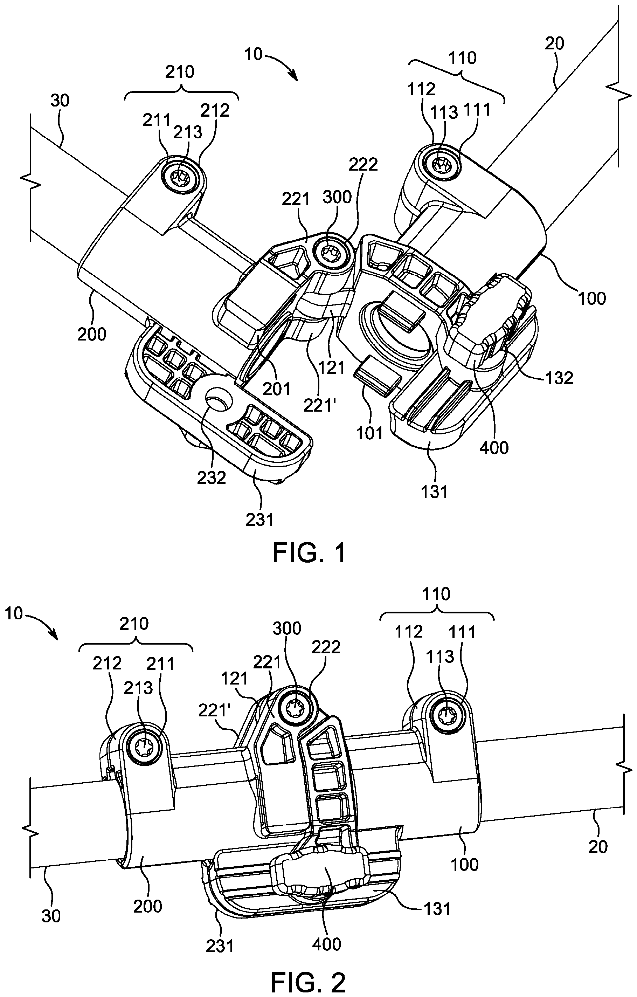

Referring to the drawings, there is shown in Figure 1 a folding mechanism 10 for a tool comprising a first pole section 20 and a second pole section 30, according to an embodiment. The folding mechanism 10 comprises a first coupling component 100, a second coupling component 200, a hinging bolt 300, and a locking bolt 400.

The first coupling component 100 is configured to receive one end of the first pole section 20. The second coupling component 200 is configured to receive one end of the second pole section 30. Each coupling component 100,200 may include a receiving recess configured to receive the respective pole section. The coupling components 100,200 may be formed with a generally cylindrical shape, where the receiving recess is formed by an internal volume of the cylindrical shape. An inner diameter of each cylindrical shape may be larger than an outer diameter of the respective pole sections. The internal volume may be open at one end of the cylindrical shape. The receiving recess may be formed by the open end of the cylindrical shape. The internal volume may be partially or fully closed at one end of the cylindrical shape. The first coupling component 100 and second coupling component 200 may be configured to couple together at the closed end of the cylindrical shape.

The first coupling component 100 and second coupling component 200 may comprise one or more interlocking elements. For example, the first coupling component 100 may include one or more interlocking protrusions 101. The interlocking protrusions 101 may be formed on the closed end of the cylindrical shape. The second coupling component 200 may include one or more interlocking recesses 201 corresponding to the interlocking protrusions 101. The interlocking recesses 201 may be formed on the closed end of the cylindrical shape. The interlocking protrusions 101 and interlocking recesses 201 may be configured to couple together when the first coupling component 100 abuts with the second coupling component 200. Alternatively, or in addition, the second coupling component 200 may include the interlocking protrusions 101 and the first coupling component 100 may include the interlocking recesses 201.

The first coupling component 100 may be configured to detachably connect to the first pole section 20 and the second coupling component 200 may be configured to detachably connect to the second pole section 30. Each coupling component 100,200 may include a clamping arrangement 110,210 for connecting to the respective pole sections 10,20. The clamping arrangements 110,210 may be formed by a longitudinal split at one end of the cylindrical shape, dividing the cylindrical shape into two tongues. Each of the two tongues on each coupling component may be formed with a clamping hole 111,211 . Each clamping hole 111,211 may be formed in a clamping member 112,212 formed on the radial outer surface of the respective tongue. Each clamping arrangement 110,210 may be formed with a clamping bolt 113,213 configured to pass through both clamping holes 111,211 of the coupling component 100,200. The clamping bolt 113,213 may be configured to urge the tongues together, reducing the inner diameter of the cylindrical shape so as to clamp the coupling component 100,200 onto the pole section 10,20.

Each coupling component 100,200 may include a hinging member 121,221 formed on the radial outer surface of the receiving recess. The hinging member 121,221 may be formed to extend beyond the linear extent of the receiving recess. The hinging member 121,221 may extend beyond the closed end of the cylindrical shape. In this way, a portion of the respective hinging member 121 may overlap with the other hinging member 221 when the first coupling component 100 and the second coupling component 200 are in abutment.

The first coupling component 100 comprises a first hinging hole 122 (not shown in this drawing). The second coupling component 200 comprises a second hinging hole 222. Each hinging hole 122,222 may be formed in the portion of the respective hinging member 121,221 which overlaps with the other hinging member 121,221 when the coupling components 100,200 are in abutment. The hinging bolt 300 is configured to pass through the first hinging hole 122 and the second hinging hole 222.

One of the first and the second coupling components 100,200 may include a second hinging member 221' and second hinging hole 222' through the second hinging member 221'. The hinging bolt 300 may be arranged to pass through both hinging holes 222,222' of the coupling component 200 as well as the hinging hole 122 of the other coupling component 100.

Each coupling component 100,200 may include a locking member 131,231 formed on a radial outer surface of the receiving recess. The locking member 131,231 may be formed on the opposite side of the cylindrical shape to the hinging member 121,221. The locking member 131,231 may be configured to extend beyond a linear extent of the receiving recess. The locking member 131,231 may extend beyond the closed end of the cylindrical shape. Each locking member 131,231 may be formed wholly on one side of a plane which passes through a central axis of the respective coupling component 100,200. The locking members 131,231 may be formed so as to be on opposite sides of the plane when the coupling components 100,200 are in abutment. In this way, a portion of the respective locking member 131 may overlap with the other locking member 231 when the first coupling component 100 and the second coupling component 200 are in abutment.

The first coupling component 100 comprises a first locking hole 132. The second coupling component 200 comprises a second locking hole 232. The locking bolt 400 is configured to pass through the first locking hole 132 and the second locking hole 232. Each locking hole 132,232 may be formed in a portion of the respective locking member 131,231 which overlaps with the other locking member 131,231 when the coupling components 100,200 are in abutment. Figure 1 shows the folding mechanism 10 in an unlocked state. In the unlocked state, the first coupling component 100 and the second coupling component 200 are connected by the hinging bolt 300 only. In the unlocked state, the first coupling component 100 and the second coupling component 200 can be freely moved with a hinging motion around the hinging bolt 300. In the unlocked state, the locking bolt 400 passes through the first locking hole 132 only.

Figure 2 is a schematic diagram showing a folding mechanism 10 according to an embodiment. As shown, the first coupling component 100 and the second coupling component 200 may be moved into a position of abutment. The hinging bolt 300 may be arranged such that the hinging motion of the first coupling component 100 and the second coupling component 200 allows the first coupling component 100 and the second coupling component 200 to move into the position of abutment.

In the position of abutment shown, the cylindrical shape of the first coupling component 100 may be in abutment with the cylindrical shape of the second coupling component 200. In the position of abutment shown, the closed end of the cylindrical shape of the first coupling component 100 may be in abutment with the closed end of the cylindrical shape of the second coupling component 200. A longitudinal axis of the first coupling component 100 may be aligned with a longitudinal axis of the second coupling component 200. Each of the interlocking protrusions 101 may be received by a corresponding one of the interlocking recesses 201.

In the position of abutment, the folding mechanism 10 may be put into a locked state. In the locked state, the locking bolt 400 may be arranged to pass through the first locking hole 132 and the second locking hole 232. In this way, the locking bolt 400 may be configured to prevent the first locking member 131 from separating from the second locking member 231. In the locking state, the locking bolt 400 may prevent hinging motion of the first coupling component 100 and the second coupling component 200 away from the position of abutment.

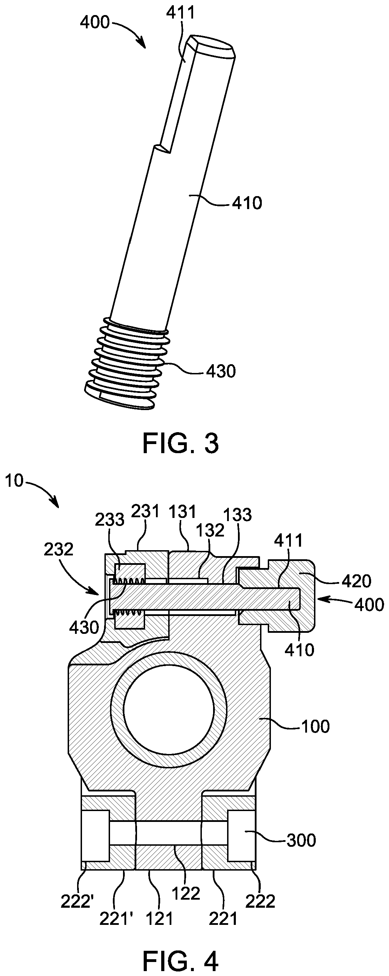

Figure 3 is a schematic diagram showing a locking bolt 400 according to an embodiment. The locking bolt 400 comprises a shaft 410 and a handle 420 (not shown). The locking bolt 400 comprises an external screw thread 430 at a first end. The locking bolt 400 comprises a handle 420 for turning the locking bolt 400 at a second end. As shown, the shaft 410 may be formed with the external screw thread 430 at a first end and a flat section 411 for engaging with the handle 420 at a second end. Alternatively, the shaft 410 and the handle 420 may be formed as a single piece.

Figure 4 is a schematic diagram showing a cross-section of a folding mechanism 10 according to an embodiment.

The second locking hole 232 is at least partially formed with an internal screw thread 233. The internal screw thread 233 of the second locking hole 232 may be formed by a nut arranged within a corresponding recess formed in the second coupling component 200. The external screw thread 430 of the locking bolt 400 is configured to engage with the internal screw thread 233 of the second locking hole 232.

The first locking hole 132 comprises a retaining element 133 to prevent removal of the locking bolt 400 from the first locking hole 132.

In this way, complete removal of the locking bolt 400 may be prevented in the unlocked state of the folding mechanism 10. Where the unlocked state of the folding mechanism 10 allows folding of the foldable tool, e.g. into a storage state, this can keep the locking bolt 400 engaged with the folding mechanism 10. As such, the locking bolt 400 may be stored with the foldable tool, preventing the user from misplacing the locking bolt 400.

The retaining element 133 may include a narrow section of the first locking hole 132 which is narrower than a diameter of the external screw thread 430 on the locking bolt 400. A length of the first locking hole 132 may be divided into the narrow section 133 and a wide section, where the wide section is arranged adjacent to the second locking hole 232 in the position of abutment. A length of the wide section may be longer that a length of the external screw thread 430. In this way, the external screw thread 433 may be fully withdrawn into the wide section, allowing disengagement of the locking bolt 400 from the second locking hole 232.

The narrow section 133 of the first locking hole may be formed as an internal screw thread corresponding to the external screw thread 430 on the locking bolt 400. In this way, the narrow section 133 can prevent removal of the locking bolt 400 by directly pulling through the first locking hole 132, while allowing full removal by unscrewing the locking bolt 400 through the narrow section 133.

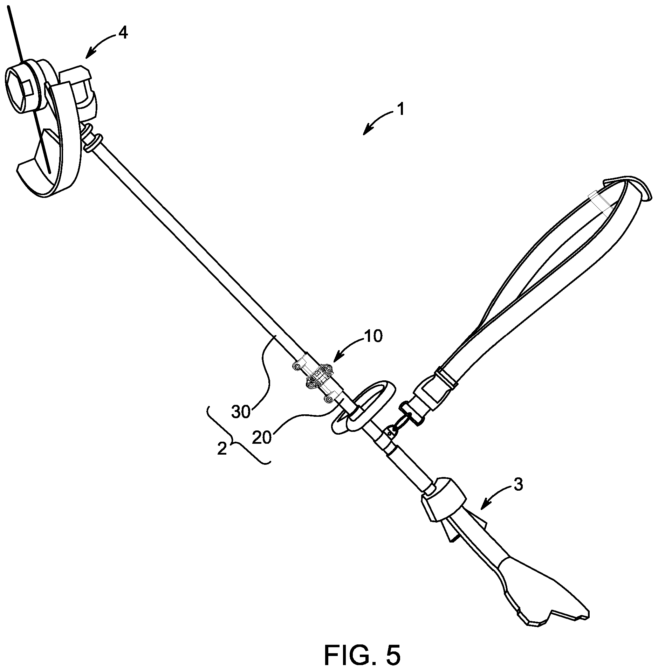

Figure 5 is a schematic diagram showing a foldable tool 1 with a folding mechanism 10 according to an embodiment.

The foldable tool 1 comprises a pole 2, a handle 3, a working component 4, and the folding mechanism 10 described above.

The pole is divided into a first pole section 20 and a second pole section 30. The handle 3 is arranged at a first end of the first pole section 20. The working component 4 is arranged at a first end of the second pole section 30. The working component 4 may include a line trimmer, a hedge trimmer, pruner or any other tool.

The second end of the first pole section 20 is received by the first coupling component 100, and the second end of the second pole section 30 is received by the second coupling component 200.

The foldable tool 1 may include a motor configured to operate the working component 4, and a user input arranged on the handle 3 and configured to activate the motor. The motor may be arranged at the first end of the second pole section 30 and connected to the user input with a wire.

The wire may be configured to pass through the first pole section 20, first coupling component 100, second coupling component 200 and the second pole section 30.

The above embodiments are described by way of example only. Many variations are possible without departing from the scope of the disclosure as defined in the appended claims.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A folding mechanism for a tool comprising a first pole section and a second pole section, the folding mechanism comprising:
a first coupling component configured to receive one end of the first pole section, comprising a first hinging hole and a first locking hole;
a second coupling component configured to receive one end of the second pole section, comprising a second hinging hole and a second locking hole, where the second locking hole is at least partially formed with an internal screw thread;
a hinging bolt configured to pass through the first hinging hole and the second hinging hole; and
a locking bolt configured to pass through the first locking hole and the second locking hole, the locking bolt comprising an external screw thread at a first end and a handle for turning the locking bolt at a second end, where the external screw thread is configured to engage with the internal screw thread of the second locking hole;
wherein the first locking hole comprises a retaining element to prevent removal of the locking bolt from the first locking hole.

2. The folding mechanism of claim 1, wherein the retaining element comprises a narrow section of the first locking hole which is narrower than a diameter of the external screw thread on the locking bolt.

3. The folding mechanism of claim 2, wherein the narrow section of the first locking hole formed as an internal screw thread corresponding to the external screw thread on the locking bolt.

4. The folding mechanism of any preceding claim, wherein the internal screw thread of the second locking hole is formed by a nut arranged within a corresponding recess formed in the second coupling component.

5. The folding mechanism of any preceding claim, wherein the first coupling component is configured to detachably connect to the first pole section and the second coupling component is configured to detachably connect to the second pole section.

6. The folding mechanism of any preceding claim, wherein each coupling component comprises a receiving recess configured to receive the respective pole section, and a locking member formed on a radial outer surface of the receiving recess and extending beyond a linear extent of the receiving recess,
wherein each locking hole is formed in a portion of the respective locking member which overlaps with the other locking member when the coupling components are in abutment.

7. The folding mechanism of claim 6, wherein each coupling component further comprises a hinging member formed on the radial outer surface of the receiving recess opposite to the locking member and extending beyond the linear extent of the receiving recess,
wherein each hinging hole is formed in a portion of the respective hinging member which overlaps with the other hinging member when the coupling components are in abutment.

8. The folding mechanism of claim 7, wherein one of the first and the second coupling components comprises a second hinging member and second hinging hole through the second hinging member, wherein the hinging bolt is arranged to pass through both hinging holes of the coupling component as well as the hinging hole of the other coupling component.

9. A foldable tool comprising:
a pole divided into a first pole section and a second pole section;
a handle arranged at a first end of the first pole section;
a working component arranged at a first end of the second pole section; and
the folding mechanism of any preceding claim, wherein the second end of the first pole section is received by the first coupling component, and the second end of the second pole section is received by the second coupling component.

10. The foldable tool of any preceding claim, further comprising a motor configured to operate the working component, and a user input arranged on the handle and configured to activate the motor.

11. The foldable tool of claim 10, wherein the motor is arranged at the first end of the second pole section and connected to the user input with a wire;
wherein the wire is configured to pass through the first pole section, first coupling component, second coupling component and the second pole section.

12. The foldable tool of any one of claims 9 to 11, wherein the working component comprises a line trimmer.

## Amended claims

### Amended claims in accordance with Rule 137(2) EPC.

1. A folding mechanism (10) for a tool comprising a first pole section (20) and a second pole section (30), the folding mechanism (10) comprising:
a first coupling component (100) configured to receive one end of the first pole section (20), comprising a first hinging hole (122) and a first locking hole (132);
a second coupling component (200) configured to receive one end of the second pole section (30), comprising a second hinging hole (222) and a second locking hole (232), where the second locking hole (232) is at least partially formed with an internal screw thread (233);
a hinging bolt (300) configured to pass through the first hinging hole (122) and the second hinging hole (222); and
a locking bolt (400) configured to pass through the first locking hole (132) and the second locking hole (232), the locking bolt (400) comprising an external screw thread (430) at a first end and a handle (420) for turning the locking bolt (400) at a second end, where the external screw thread (430) is configured to engage with the internal screw thread (233) of the second locking hole (232);
wherein the first locking hole (132) comprises a retaining element (133) to prevent removal of the locking bolt (400) from the first locking hole (132).

2. The folding mechanism (10) of claim 1, wherein the retaining element (133) comprises a narrow section of the first locking hole (132) which is narrower than a diameter of the external screw thread (430) on the locking bolt (400).

3. The folding mechanism (10) of claim 2, wherein the narrow section of the first locking hole (132) formed as an internal screw thread corresponding to the external screw thread (430) on the locking bolt (400).

4. The folding mechanism (10) of any preceding claim, wherein the internal screw thread (233) of the second locking hole (232) is formed by a nut arranged within a corresponding recess formed in the second coupling component (200).

5. The folding mechanism (10) of any preceding claim, wherein the first coupling component (100) is configured to detachably connect to the first pole section (20) and the second coupling component (200) is configured to detachably connect to the second pole section (30).

6. The folding mechanism (10) of any preceding claim, wherein each coupling component (100, 200) comprises a receiving recess configured to receive the respective pole section (20, 30), and a locking member (131, 231) formed on a radial outer surface of the receiving recess and extending beyond a linear extent of the receiving recess,
wherein each locking hole (132, 232) is formed in a portion of the respective locking member (131, 231) which overlaps with the other locking member (131, 231) when the coupling components (100, 200) are in abutment.

7. The folding mechanism (10) of claim 6, wherein each coupling component (100, 200) further comprises a hinging member (121, 221) formed on the radial outer surface of the receiving recess opposite to the locking member (131, 231) and extending beyond the linear extent of the receiving recess,
wherein each hinging hole (122, 222) is formed in a portion of the respective hinging member (121, 221) which overlaps with the other hinging member (121, 221) when the coupling components (100, 200) are in abutment.

8. The folding mechanism (10) of claim 7, wherein one of the first and the second coupling components (100, 200) comprises a second hinging member (221') and second hinging hole (222') through the second hinging member (221'), wherein the hinging bolt (300) is arranged to pass through both hinging holes (122, 222) of the coupling component (100, 200) as well as the hinging hole (222') of the other coupling component (100, 200).

9. A foldable tool (1) comprising:
a pole (2) divided into a first pole section (20) and a second pole section (30);
a handle (3) arranged at a first end of the first pole section (20);
a working component (4) arranged at a first end of the second pole section (30); and
the folding mechanism (10) of any preceding claim, wherein the second end of the first pole section (20) is received by the first coupling component (100), and the second end of the second pole section (30) is received by the second coupling component (200).

10. The foldable tool (1) of any preceding claim, further comprising a motor configured to operate the working component (4), and a user input arranged on the handle (3) and configured to activate the motor.

11. The foldable tool (1) of claim 10, wherein the motor is arranged at the first end of the second pole section (30) and connected to the user input with a wire;
wherein the wire is configured to pass through the first pole section (20), first coupling component (100), second coupling component (200) and the second pole section (30).

12. The foldable tool (1) of any one of claims 9 to 11, wherein the working component (4) comprises a line trimmer.
